# EUROPÄISCHE PATENTSCHRIFT

(11) **EP 0 929 948 B1**
(45) Veröffentlichungstag und Bekanntmachung des Hinweises auf die Patenterteilung: **04.04.2001**
(21) Anmeldenummer: 97909191.5
(22) Anmeldetag: 25.09.1997
(51) Int. Cl.: H04B 5/00, G05B 19/00

(54) **LEITUNGSLOSE ENERGIE- UND DATENÜBERTRAGUNG FÜR EIN MODULARES PERIPHERIE-SYSTEM**
WIRELESS ENERGY AND DATA TRANSFER FOR A MODULAR PERIPHERAL SYSTEM
DISPOSITIF DE TRANSMISSION DE DONNEES ET D'ENERGIE SANS LIGNE POUR UN SYSTEME PERIPHERIQUE MODULAIRE

(30) Priorität: 30.09.1996 DE 19640367
(43) Veröffentlichungstag der Anmeldung: 21.07.1999
(73) Patentinhaber: SIEMENS AKTIENGESELLSCHAFT, 80333 München (DE)
(72) Erfinder: HEITZER, Herbert, D-92245 Kümmersbruck (DE)
(86) Internationale Anmeldenummer: DE9702180
(87) Internationale Veröffentlichungsnummer: WO9815069

(56) Entgegenhaltungen:
- DE-A- 3 808 135
- DE-A- 4 344 071
- US-A- 5 293 400

## Beschreibung

Die vorliegende Erfindung betrifft eine modular aufgebaute elektronische Steuerung, insbesondere eine speicherprogrammierbare Steuerung oder Peripheriebaugruppen, jeweils zur Steuerung und/oder Überwachung eines technisches Prozesses.

Modular aufgebaute Steuerungen der eingangs beschriebenen Art sind im Stand der Technik allgemein bekannt. Die Versorgung der einzelnen Module mit elektrischer Energie aus einer Versorgungsquelle erfolgt über elektrische Verbindungen, mit denen entweder jedem einzelnen Modul die elektrische Energie zugeführt wird oder aber mit denen einem ersten Modul die elektrische Energie zugeführt wird, welches diese seinerseits an ein benachbartes Modul weiterleitet. Die Weiterleitung der elektrischen Energie an sämtliche Module der modular aufgebauten elektronischen Steuerung erfolgt über im wesentlichen gleichartige Verbindungselemente. Ähnliches gilt für den zwischen den Modulen vorgesehenen Datenfluß. Der Datenfluß läuft dann über Verbindungselemente, die die einzelnen Module mit einem weiteren Verbindungselement kontaktieren, wobei dieses weitere Verbindungselement z. B. die elektrisch leitenden Verbindung zu einem Bus herstellt.

Verfahren zur leitungslosen Energie- und/oder Datenübertragung sind im Stand der Technik, insbesondere im Bereich der Kommunikation allgemein bekannt. Nicht bekannt ist hingegen, ein solches Verfahren für die Energie und/oder Datenübertragung zwischen Modulen oder Peripheriebaugruppen einer Steuereinrichtung, die einen technischen Prozeß steuert und/oder überwacht, zu verwenden. Bei derartigen Geräten erfolgt die Energie- und/oder Datenübertragung über geeignete elektrisch leitende Verbindungen. Insbesondere ist hier das Konzept des seriellen oder parallelen Busses weit verbreitet.

Bei einer aus der US-A-5 293 490 bekannten Anordnung sind die Kopf-, Zwischen- und Endmodule immer mit einem Bus (entweder als Eingangs- oder als Ausgangsstelle) verbunden. Der beschriebenen Anordnung liegt dabei das Problem zugrunde, die Übertragung von Daten über einen Bus aufrechtzuerhalten, wenn der Bus selbst aufgrund prozeßbedingter Umstände an einer Stelle unterbrochen ist. Die beschriebene Kopplungsvorrichtung wurde demnach zur leitungslosen Verbindung zweier Busleitungsenden entwickelt.

Nachteilig bei den im Stand der Technik bekannten Verbindungen zwischen derartigen Modulen ist die mechanische oder atmosphärische Beanspruchung der in den Verbindungselementen angeordneten Kontaktelemente, mit denen eine lösbare, elektrisch leitende Verbindung bisher hergestellt ist. Durch wiederholtes Kontaktieren eines solchen Modules ergeben sich erhebliche mechanische Belastungen für die einzelnen Kontaktelemente, die zum Beispiel zum Verbiegen eines Kontaktelementes führen können. Wenn ein verbogenes Kontaktelement die gewünschte elektrische Verbindung nicht herstellt, werden beabsichtige Funktionen, die durch das Modul gesteuert werden, nicht ausgeführt. Die kann zu Gefährdungen des Bedienpersonals, der elektrischen Anlage, oder aber zu Schädigungen der technischen Anlage selbst oder aber zu Beschädigungen der mit der technischen Anlage gefertigten Produkte führen. Denkbar ist weiterhin, daß bei einem mechanisch beschädigten Kontaktelement die elektrisch leitende Verbindung nur sporadisch entsteht, so daß es in gleicher Weise zu den bereits zuvor beschriebenen nachteiligen Auswirkungen kommen kann. Erschwerend kommt in diesem Falle hinzu, daß der durch die mechanische Beschädigung des Kontaktelementes hervorgerufene Fehler nur sehr schwer zu finden ist, da er nur von Zeit zu Zeit auftritt.

Weiterhin ist es denkbar, daß bei einer mechanischen Beschädigung eines Kontaktelementes auch unerwünschte Kontaktierungen zu anderen Kontaktelementen hergestellt werden. Auch in diesem Falle kann es zu den bereits beschriebenen nachteiligen Auswirkungen kommen.

Allerdings sind die Kontaktelemente nicht nur durch mechanische, sondern auch durch atmosphärische Einflüsse gefährdet.

Im Falle von Oxidationen der Kontaktelemente ist die elektrisch leitende Verbindung der mechanisch korrekt miteinander in Kontakt stehenden Kontaktelemente nicht mehr gewährleistet. Entweder besteht gar keine elektrisch leitende Verbindung mehr, oder aber nur eine sporadische elektrisch leitende Verbindung mit den bereits oben beschriebenen Nachteilen.

Ein besonderer Vorteil der erfindungsgemäßen elektronischen Steuerung besteht darin, daß ein besonders einfacher Austausch einzelner Module der Steuerung oder aber ein Hinzufügen und Entnehmen einzelner Module dieser Steuerung möglich wird. Da die einzelnen Module keine Kontaktelemente aufweisen, über die eine Einspeisung der elektrischen Energie oder der Datenfluß erfolgt, ist das Hinzufügen eines Moduls einfach durch die geeignete räumliche Anordnung diese Moduls in Bezug auf die in der modular aufgebauten elektronischen Steuerung bereits vorhandenen Module zu bewerkstelligen. Beim Entfernen eines Modules wird dieses aus der Steuerung einfach entnommen, wobei nach der Entnahme lediglich auf die korrekte räumliche Anordnung der verbleibenden Module zu achten ist. Das Entnehmen und Hinzufügen von Modulen einer derartigen Steuerung ist damit auch für nicht oder nur im geringen Maße geschultes Personal durchführbar.

Ein weiterer Vorteil besteht für die Module der erfindungsgemäßen Steuerung darin, daß die Module in ihren Gehäusen sehr viel besser kapselbar sind, als dies bei den im Stand der Technik bekannten Modulen bisher möglich war. Entsprechend zeichnen sich die Module der erfindungsgemäßen Steuerung durch eine sehr hohe Schutzart aus. Da die bekannten Module bisher stets Anschluß- oder Kontaktelemente aufwiesen, die mit der in den Modul enthaltenen Elektronik kontaktiert waren, war bisher eine vollständige Kapselung der in den Modul enthaltenen Elektronik nicht möglich. Damit ist aber auch die in dem bekannten Modul enthaltene Elektronik störenden Umwelteinflüssen, wie z.B. Staub oder atmosphärischen Belastungen, ausgesetzt. Die erfindungsgemäße Steuerung eignet sich damit in hervorragender Weise für einen Einsatz in der rauhen Industrieumgebung. Aus diesem Grunde ist es z.B. auch denkbar, eine erfindungsgemäße elektronische Steuerung nicht mehr wie bisher in einem schützenden Schaltschrank anzuordnen, sondern unmittelbar in räumlicher Nähe zu dem von der elektronischen Steuerung gesteuerten oder überwachten Gerät, Anlage oder Anlagenteil. Die Anbindung einzelner Module an die zu steuernde oder zu überwachende Peripherie kann dann beispielsweise mittels spezieller Verbindungselemente erfolgen, die z.B. mit dem Modul fest verschraubbar sind und die damit z.B. eine ähnliche oder aber die gleiche Schutzart wie das Modul aufweisen. Die erfindungsgemäße Steuerung eignet sich damit auch besonders gut für den Einsatz in dezentral aufgebauten Automatisierungssystemen.

Im Zuge der zunehmenden Miniaturisierung der elektronischen Bauteile, die bei einem Modul einer derartigen elektronischen Steuerung zum Einsatz kommen, ist es bei den im Stand der Technik bekannten elektronischen Steuerungen oftmals so, daß die räumlichen Ausdehnungen der einzelnen Module in nicht unwesentlichem Maße durch die räumlichen Ausdehnungen der Verbindungselemente vorgegeben sind. Im Falle z.B. eines Einsatzes eines parallelen Busses darf weder die minimale Ausdehnung einer einzelnen Kontaktbahn eines solchen Busses, noch der minimale Abstand zwischen den einzelnen Kontaktbahnen dieses Busses unterschritten werden. Damit ergibt sich auch eine untere Grenze für die Ausdehnung der zu verwendenden Verbindungselemente, die damit auch die Dimension der Module vorgibt. Übertrager, die zur Übermittlung der Energie und/oder der Daten in den Modulen der erfindungsgemäßen Steuerung angeordnet sind, lassen sich räumlich oftmals kleiner dimensionieren, als im Vergleich dazu die bisher benötigten Verbindungselemente. Damit läßt sich der Platzbedarf der einzelnen Module und damit insgesamt auch der Platzbedarf der elektronischen Steuerung verringern. Auch aus diesem Aspekt ist vorteilhafterweise der Einsatz einer erfindungsgemäßen Steuerung dezentral, in unmittelbarer Nähe zu der zu steuernden oder zu überwachenden Peripherie möglich. Aber auch bei einer herkömmlichen Anordnung in einem Schaltschrank ist die erzielbare Platzersparnis ein nicht unerheblicher Vorteil.

Aufgabe der Erfindung ist es daher, eine modular aufgebaute Steuerung anzugeben, bei der eine Energie- und/oder Datenübertragung zwischen den einzelnen Modulen, z.B. Module oder Peripheriegeräte, auf leitungslosem Wege erfolgt.

Diese Aufgabe wird für die modular aufgebaute elektrische Steuerung nach dem Oberbegriff des Anspruches 1 dadurch gelöst, daß nur in ein Modul die elektrische Energie galvanisch eingespeist wird und von diesem Moudl ausgehend auf drahtlosem elektromagetischem Weg eine Energiezufuhr zu den anderen Modulen erfolgt und daß über denselben elektronmagnetischen Weg auch der Datenfluß geleitet wird. Dazu weist jedes Modul zumindest einen Sender zur Erzeugung eines elektromagnetischen Feldes auf, wobei der Sender eine Daten- und/oder Energiequelle bildet und der Empfänger eine Daten- und/oder Energiesenke bildet, so daß die Daten und/oder Energiequelle Daten und/oder Energie an andere, insbesondere benachbarte Modulgeräte übermittelt, und daß die Daten- und/oder Energiesenke Daten und/oder Energie von anderen, insbesondere benachbarten Modulen empfängt.

Die Kopplung der Module erfolgt dabei z.B. in einer seriellen Struktur, in einer sternförmigen Struktur oder aber in einer Ringstruktur. Daraus wird ein weiterer Vorteil der erfindungsgemäßen elektronischen Steuerung ersichtlich, der darin besteht, daß die Module in einer nahezu beliebigen Topologie anordenbar sind. Die Kopplung der Module kann dabei entsprechend der mit dem unterschiedlichen Topologien verbundenen Vor- oder Nachteile ausgewählt werden. Der Vorteil einer seriellen oder baumförmigen Struktur besteht in der leichten Einfügbarkeit bzw. Entnehmbarkeit einzelner Module aus dieser Struktur. Allerdings sinkt der Datendurchsatz stark, wenn zu viele Module angeschlossen sind. Der Ausfall eines Modules zieht meist nur nach sich, daß dieses Modul nicht mehr angesprochen werden kann. Im Falle einer sternförmigen Topologie verläuft der Datenfluß über ein zentrales Modul, daß in Abhängigkeit von einer gegebenen Zieladresse die entsprechende Weiterleitung vornimmt. Der Vorteil einer solchen Topologie besteht in ihrer leichten Erweiterbarkeit und in der Tatsache, daß ein Ausfall eines Moduls kaum Störungen im Gesamtsystem nach sich zieht. Allerdings führt ein Ausfall des zentralen Moduls zu einem Totalausfall.

Weitere Vorteile und erfinderische Einzelheiten ergeben sich aus der nachfolgenden Beschreibung eines Ausführungsbeispiels, anhand der Zeichnungen und in Verbindung mit den Unteransprüchen. Im einzelnen zeigen:
- FIG 1: eine modular aufgebaute, elektronische Steuerung,
- FIG 2: Module einer modular aufgebauten, elektronischen Steuerung, zwischen denen eine leitungslose Energieund/oder Datenübertragung erfolgt,
- FIG 3: die Weiterleitung von Energie und Daten ausgehend von einem Kopfmodul zu weiteren Modulen

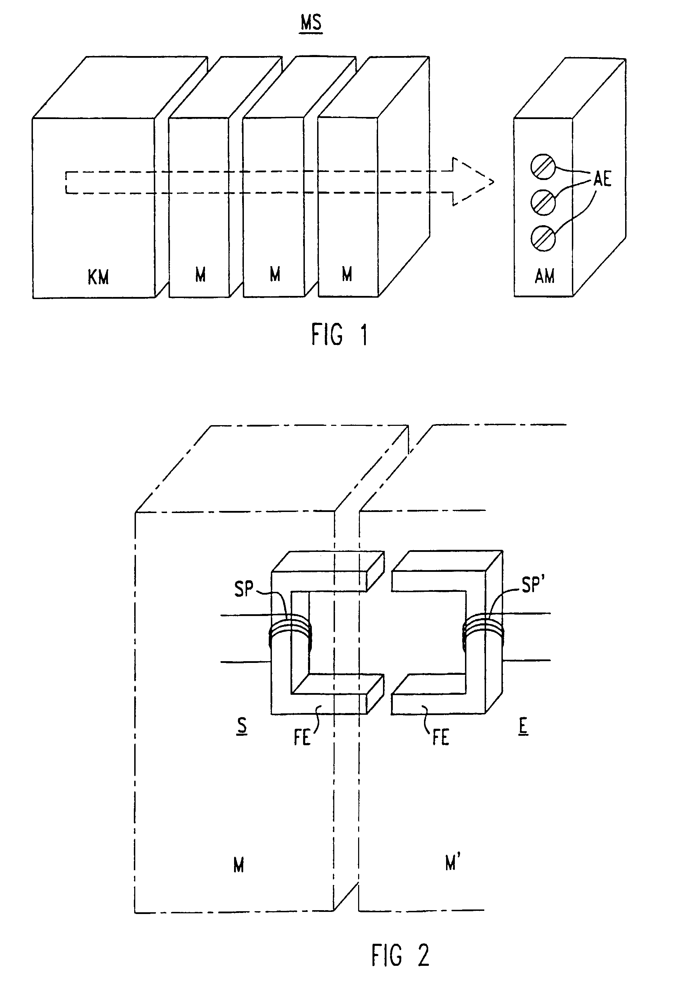

FIG 1 zeigt eine modular aufgebaute speicherprogrammierbare elektronische Steuerung MS. Bei den im Stand der Technik bekannten modularen Steuerungen erfolgt die Weiterleitung der elektrischen Signale, d.h. die Energie- und/oder Datenübertragung, über geeignete elektrisch leitende Verbindungen. Zwischen den Modulen KM, M, AM der modularen Steuerung MS gemäß FIG 1 besteht keine elektrisch leitende Verbindung. Die Energie- und/oder Datenübertragung erfolgt mittels elektromagnetischer Felder.

Mit Ausnahme eines Kopfmoduls KM und eines Abschlußmoduls AM weist jedes Modul zu diesem Zweck zumindest eine in FIG 1 nicht dargestellte Daten- und/oder Energiequelle sowie eine Daten- und/oder Energiesenke auf. Im Falle des Kopfmoduls KM, von dem die Daten- und/oder Energieübertragung ausgeht, ist eine Daten- und/oder Energiequelle ausreichend. Im Falle des Abschlußmoduls AM, bei dem die Daten und/oder Energieübertragung endet, ist eine Daten- und/oder Energiesenke ausreichend. Das Kopfmodul KM wird über in FIG 1 nicht dargestellten Kontaktelemente aus einer externen Energiequelle mit Energie versorgt. Im Ausführungsbeipsiel gemäß FIG 1 weist das Abschußmodul AM Anschlußelemente AE zur Interaktion mit dem gesteuerten oder überwachten technischen Prozeß auf. In abweichenden Ausgestaltungen ist es selbstverständlich auch denkbar, daß zusätzlich oder alternativ auch andere Module KM, MM' diese Anschlußelemente AE aufweisen.

Im folgenden wird die Beschreibung für eine Datenübertragung zwischen einer Datenquelle und einer Datensenke fortgesetzt. Dies schließt auf jeden Fall auch die Energieübertragung zwischen einer Energiequelle und einer Energiesenke mit ein. Dabei können Daten- und Energiequelle bzw. Daten- und Energiesenke die gleichen physikalischen Elemente sein.

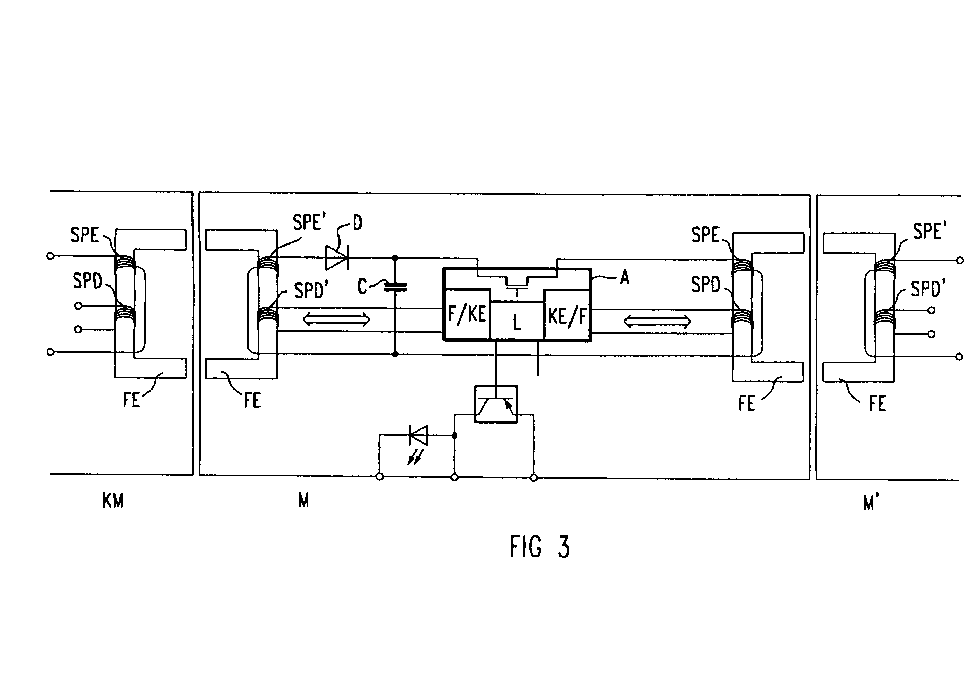

FIG 2 zeigt eine Realisierungsmöglichkeit für die Datenübertragung von einem Modul M zum Nachbarmodul M'. Das erste Modul M enthält als Datenquelle eine Spule SP mit einer geeigneten Windungszahl, wobei sich in der Spule SP ein U-förmiges, ferromagnetisches Element FE befindet. Das Nachbarmodul M' weist als Datensenke gleichfalls eine Spule SP' mit einer geeigneten, in diesem Falle gleichen Windungszahl auf, wobei sich in der Spule SP' wieder ein U-förmiges, ferromagnetisches Element FE befindet. Im folgenden wird die Datenquelle S als Sender S, die Datensenke E als Empfänger E bezeichnet. Gleichfalls wird die Spule SP auf der Seite des Senders S als Senderspule SP, die Spule SP' auf der Seite des Empfängers E als Empfängerspule SP' bezeichnet.

In diesem Zusammenhang ist es besonders wichtig, darzulegen, daß für die Datenübertragung der erfindungsgemäßen, modular aufgebauten elektronischen Steuerung keine Vorzugsrichtung besteht. Die Beschreibung wird lediglich aus Gründen der Übersichtlichkeit für eine Datenübertragung mit einer als Sender S bezeichneten Vorrichtung zur Erzeugung eines elektromagnetischen Feldes und einer als Empfänger E bezeichneten Vorrichtung zur Detektion eines elektromagnetischen Feldes fortgesetzt. Da Sender S und Empfänger E im wesentlichen baugleich sind, kann selbstverständlich auch die als Sender S bezeichnete Vorrichtung ein elektromagnetisches Feld detektieren und entsprechend auch die als Empfänger E bezeichnete Vorrichtung ein elektromagnetisches Feld erzeugen. Es ist also in jedem Falle eine bidirektionale Energie- und/oder Datenübertragung möglich, wobei die Richtung der Datenübertragung durch das für die Datenübertragung verwendete Protokoll - speziell mittels mit dem Protokoll übertragbarer und identifizierbarer Steueranweisungen - steuerbar ist.

Bei dem Ausführungsbeispiel gemäß FIG 2 sind Sender S und Empfänger E von einem Gehäuse des jeweiligen Moduls M, M' zumindest teilweise umschlossen. Die Anordnung des Moduls M, das den Sender S enthält, in Bezug auf das Modul M', das den Empfänger E enthält, ist dabei so gewählt, daß die beiden Modulen M, M' benachbart sind und zueinander so angeordnet sind, daß eine Seite des Moduls M mit dem Sender S einer Seite des Moduls M' mit dem Empfänger E gegenüberliegt, so daß damit die Übertragungsstrecke möglichst kurz ist, womit auch die möglichen Verluste minimiert werden. Die Verluste lassen sich vorteilhafterweise weiter minimieren, wenn die Bereiche des Gehäuses der Module M, M', die den magnetischen Kreis unterbrechen, selbst aus einem ferromagnetischen Material gefertigt sind, insbesondere aus dem gleichen ferromagnetischen Material, aus dem auch die ferromagnetischen Elemente FE der jeweiligen Module M, M' gefertigt sind. In einer konkreten in FIG 2 nicht dargestellten Ausgestaltung durchstoßen beispielsweise die Schenkel der ferromagnetischen Elemente FE der Module M, M' die Gehäuse der jeweiligen Module M, M', so so daß die Endflächen der Schenkel der ferromagnetischen Elemente FE bündig mit der Außenkontur des Gehäuses des jeweiligen Moduls MM' abschließen, so daß der Abstand zwischen den beiden ferromagnetischen Elementen FE tatsächlich minimal ist und nur noch durch den Abstand der Module M, M' untereinander festgelegt ist.

Wenn die Senderspule SP von Strom durchflossen wird, bildet sich im ferromagnetischen Kern FE der Senderspule SP ein Magnetfeld aus. Sind, wie beim Ausführungsbeispiel gemäß FIG 2, die ferromagnetischen Kerne FE von Senderspule SP und Empfängerspule SP' so angeordnet, daß sie einen nahezu geschlossenen Kreis bilden, so wird die magnetische Flußdichte im wesentlichen auf den damit gebildeten magnetischen Kreis beschränkt. Der durch die Senderspule SP fließende Strom induziert damit in dem magnetischen Kreis ein Magnetfeld, das seinerseits in der Empfängerspule SP' wieder einen elektrischen Strom hervorruft. Der in der Empfängerspule SP' hervorgerufene Strom ist proportional zu dem durch die Senderspule SP fließenden Strom. Bei gleicher Windungszahl von Empfängerspule SP' und Senderspule SP und gleichem Material der ferromagnetischen Kerne FE der jeweiligen Spulen SP, SP' und weiter gleichen Abmessungen der ferromagnetischen Kerne FE entspricht die in der Empfängerspule SP' hervorgerufene Stromstärke im wesentlichen derjenigen des durch die Senderspule SP fließenden Stromes. Damit eignet sich die leitungslose Übertragung in gleicher Weise für eine auf Wechselstrom basierende Energieversorgung, wie auch für die leitungslose Übertragung von Signalen, so daß schließlich auch Informationen leitungslos von einem Modul M zum Nachbarmodul M' übertragbar sind.

Die gleichzeitige Übertragung von Energie- und Daten kann entweder in einer nicht dargestellten Ausgestaltung der Erfindung mittels zweier Senderspulen und zweier in diesen angeordneter ferromagnetischer Kerne auf der Senderseite sowie zwei Empfängerspulen mit in diesen jeweils angeordneten ferromagnetischen Kernen auf der Empfängerseite erfolgen. Eine weitere Möglichkeit besteht jedoch auch darin, jeweils auf Empfänger- bzw. Senderseite nur ein ferromagnetisches Element FE zu verwenden, wobei an diesem ferromagnetischen Element FE jeweils zwei Spulen SPE, SPD, SPE', SPD' angebracht sind, ein Spulenpaar SPE, SPE' zur Energie-, das andere Spulenpaar SPD, SPD' zur Datenübertragung. Diese Anordnung ist in FIG 3 dargestellt.

Erneut sei an dieser Stelle darauf hingewiesen, daß mit der Wahl möglichst deklarativer Bezeichnungen für die einzelnen Komponenten der erfindungsgemäßen, modular aufgebauten elektronischen Steuerung keine Vorzugsrichtung für die Energieund/oder Datenübertragung vorgegeben ist.

Bei der Übertragung eines Wechselstromes mit der Senderspule SPE bildet sich demnach im ferromagnetischen Element FE ein zeitveränderliches Magnetfeld aus, das in der Empfängerspule SPE' einen frequenzgleichen Wechselstrom hervorruft. Auch die mit der Senderspule SPD zu übertragenden Daten variieren notwendigerweise, so daß die durch die jeweilige Spule SPD hervorgerufene magnetische Feldstärke die durch die Senderspule SPE für die Energieübertragung hervorgerufene Feldstärke überlagert. Die Daten werden somit auf das durch die Energieübertragung hervorgerufene Magnetfeld aufmoduliert. Durch einen entsprechenden Filter F können auf der Empfängerseite die aufmodulierten Daten dem elektromagnetischen Feld wieder entnommen werden, so daß auch auf der Empfängerseite Daten und Energie wieder separat abgreifbar sind.

FIG 3 zeigt exemplarisch die Weiterleitung von Energie und Daten von einem Kopfmodul KM, das im Ausführungsbeispiel lediglich einen Sender S enthält, zu einem weiteren Modul M, das eine dem Sender S des Kopfmoduls KM gegenüberliegend angeordneten Empfänger E aufweist und weiterhin zur Weiterleitung von Energie und Daten einen eigenen Sender S aufweist. Die Energie wird dem Kopfmodul KM aus einer externen Energiequelle zugeführt. Das dem ersten Modul M benachbarte Modul M' ist nur teilweise dargestellt. Es weist gleichfalls einen dem Sender S des ersten Moduls M gegenüberliegend angeordneten Empfänger E auf. Wenn es sich bei diesem nachfolgenden Modul M' um das Abschlußmodul AM handelt, ist ein weiterer Sender S analog zu dem ersten Modul M nicht erforderlich. Wenn sich auch an dieses Modul M' weitere Module M,-M' anschließen, so weist auch dieses Modul M' einen entsprechenden Sender S zur Weiterleitung von Energie und Daten auf.
Gemäß FIG 3 weist das Kopfmodul KM als Komponente des Senders S ein U-förmiges, ferromagnetisches Element FE auf. Das Modul M weist ein entsprechendes ferromagnetisches Element FE als Komponente des Empfängers E auf. Die beiden Schenkel der ferromagnetischen Elemente FE sind einander so zugewandt, daß die beiden U-förmigen, ferromagnetischen Elemente FE eine kreisförmige Anordnung bilden. Auf der Basis der U-förmigen, ferromagnetischen Elemente FE sind in jedem Modul die Wicklungen zweier Spulen SPE, SPD aufgebracht. Die erste Spule SPE innerhalb des Kopfmoduls KM ist Teil des Stromkreises zur Energieübertragung, die zweite Spule SPD nnerhalb des Kopfmoduls KM ist Teil des Stromkreises zur Datenübertragung.

Entsprechend ist die erste Spule SPE' innerhalb des Moduls M Teil des Stromkreises zur Energieversorgung dieses Moduls M und die zweite Spule SPD' Teil des Stromkreises zur Datenauswertung und -verarbeitung. Dieser prinzipielle Aufbau setzt sich bei weiteren angeschlossenen Modulen M' fort, so daß auch in weitere angeschlossene Module M' jeweils die Energie oder die Daten übertragen werden.

Bei der Anordnung gemäß FIG 3 erfolgt die Energie- und die Datenübertragung über jeweils einen Sender S und einen Empfänger E. In diesem Falle sind, wie bereits beschrieben, die Signale, mit denen die Daten übertragen werden, auf die Signale, mit denen die Energie übertragen wird, aufmoduliert. Zur Extraktion der Datensignale weist das Modul M einen Filter F auf. Nach der Filterung liegen die Daten wieder in der Form vor, wie sie von dem sendenden Modul ursprünglich ausgesandt wurden. In dieser Form können sie dann von einer Logik L verarbeitet werden. Im Ausführungsbeispiel gemäß FIG 3 ist die Filtereinheit F und die Logikeinheit L in ein ASIC A integriert. Gleichfalls in dieses ASIC A integriert ist eine Konvertierungseinheit KE, mit der die Daten wieder in analoge elektrische Signale umgewandelt werden, so daß deren Übertragung mit den bereits beschriebenen Übertragungselementen S, E gelingt.

Der Stromkreis zur Energieversorgung des Modules M weist einen Kondensator C, der parallel zu der auf dem ferromagnetischen Element FE des Empfängers E aufgebrachten Spule SPE' geschaltet ist, und eine Diode D auf. Diode D und Kondensator C stellen eine Gleichrichterdiode D mit nachgeschalteter Pufferkapazität C dar, um die zur Energieversorgung empfangene Wechselspannung wieder gleichzurichten. Die Energieübertragung erfolgt üblicherweise mit "Chopperfrequenzen" im kHz-Bereich.

Es soll nochmals darauf hingewiesen werden, daß zu der vorstehend beschriebenen Energie- und Datenübertragung auch Sender S bzw. Empfänger E verwendet werden können, bei denen jeweils die Windungen einer Spule auf einem eigenen ferromagnetischen Element aufgebracht sind. Beide Module M, M' würde damit zwei Sender S und zwei Empfänger E enthalten, wobei eines der Elemente zur Energieübertragung, das andere zur Datenübertragung dient. In diesem Fall entfällt die notwendige Filterung der aufmodulierten Daten.

Im Gegensatz zur bisher beschriebenen Datenübertragung mittels im wesentlichen induktiver Elemente kann die Datenübertragung gleichfalls auch mit im wesentlichen kapazitiven Elementen, z.B. Kondensatoren, erfolgen. Anstelle der Windungen einer Spule, die auf ein ferromagnetisches Element FE aufgebracht ist, weist jedes Modul dann als Sendevorrichtung z.B. eine Platte eines Plattenkondensators auf. Die korrespondierende Empfangsvorrichtung in dem benachbarten Modul ist die entsprechende zweite Platte des Plattenkondensators. Bei Anlegen einer Spannung an den so gebildeten Kondensator bildet sich zwischen den Kondensatorplatten ein elektrisches Feld aus, das ganz analog wie das zuvor beschriebene Magnetfeld zur Energie- und/oder Datenübertragung verwendet werden kann.

Um die Möglichkeit zur Realisierung unterschiedlichsten Topologien zu schaffen, ist es in vom zuvor beschriebenen Ausführungsbeispiel abweichenden Realisierungen auch möglich, in den einzelnen Modulen mehr als jeweils nur eine Sendevorrichtung S bzw. Empfangsvorrichtung E anzuordnen. Außerdem ist es z.B. möglich, daß ausgehend von dem Kopfmodul KM die Energie-und/oder Datenübertragung nicht nur in eine Richtung sondern in zwei Richtungen erfolgt, so daß das Kopfmodul KM z.B. zwei Daten- und/oder Energiequellen zur leitungslosen Daten-und/oder Energieübertragung aufweist. Im Falle einer ringförmigen Topologie der Module der erfindungsgemäßen speicherprogrammierbaren Steuerung weist selbstverständlich auch das Kopfmodul KM eine Daten- und/oder Energiesenke auf.

## Patentansprüche

1. Modular aufgebaute elektronische Steuerung,
- wobei ein Kopfmodul (KM) mit elektrischer Energie aus einer Versorgungsquelle, insbesondere einem Netz, versorgt wird und
- wobei zwischen den einzelnen Modulen (KM, M, M', AM) ein Daten- und/oder Energiefluß vorgesehen ist,
**dadurch gekennzeichnet,**
- daß von dem Kopfmodul (KM) ausgehend auf drahtlosem elektromagnetischem Weg eine Energiezufuhr zu zumindest einem Zwischenmodul (M, M') und von diesem ausgehend zu zumindest einem weiteren Zwischenmodul (M, M') und/oder zu einem Abschlußmodul (AM) erfolgt und
- daß über denselben elektromagnetischen Weg auch der Datenfluß geleitet wird.

2. Speicherprogrammierbare Steuerung,
- wobei ein Kopfmodul (KM) mit elektrischer Energie aus einer Versorgungsquelle, insbesondere einem Netz, versorgt wird und
- wobei zwischen den einzelnen Modulen (KM, M, M', AM) ein Daten- und/oder Energiefluß vorgesehen ist,
**dadurch gekennzeichnet,**
- daß von dem Kopfmodul (KM) ausgehend auf drahtlosem elektromagnetischem Weg eine Energiezufuhr zu zumindest einem Zwischenmodul (M, M') und von diesem ausgehend zu zumindest einem weiteren Zwischenmodul (M, M') und/oder zu einem Abschlußmodul (AM) erfolgt und
daß über denselben elektromagnetischen Weg auch der Datenfluß geleitet wird.

3. Steuerung nach Anspruch 1 und 2,
**dadurch gekennzeichnet,**
- daß die Zwischenmodule (M, M') jeweils zumindest einen Sender (S) und zumindest einen Empfänger (E) aufweisen,
- wobei der Sender Daten und/oder Energie an andere Module (M, M', AM) übermittelt und wobei der Empfänger Daten und/oder Energie von anderen Modulen (KM, M, M') empfängt.

4. Steuerung nach einem der obigen Ansprüche,
**dadurch gekennzeichnet,**
daß Sender (S) und Empfänger (E) von einem Gehäuse zumindest teilweise umschlossen sind, und daß Sender (S) eines ersten Moduls und Empfänger (E) eines zweiten Moduls räumlich benachbart sind und zueinander so angeordnet sind, daß eine Seite des Sendergehäuses einer Seite des Empfängergehäuses gegenüberliegt, so daß die Übertragungsstrecke möglichst kurz ist.

## Claims

1. Modularly constructed electronic control system,
- wherein a head module (KM) is supplied with electrical power from a supply source, in particular a mains, and
- wherein a data and/or power flow is provided between the individual modules (KM, M, M', AM),
characterized
- in that, proceeding from the head module (KM), power is transferred by a wireless electromagnetic method to at least one intermediate module (M, M') and, proceeding from the latter, to at least one further intermediate module (M, M') and/or to one terminal module (AM) and
- in that the data flow is also routed by the same electromagnetic method.

2. Memory-programmable control system,
- wherein a head module (KM) is supplied with electrical power from a supply source, in particular a mains, and
- wherein a data and/or power flow is provided between the individual modules (KM, M, M', AM),
characterized
- in that, proceeding from the head module (KM), power is fed by a wireless electromagnetic method to at least one intermediate module (M, M') and, proceeding from the latter, to at least one further intermediate module (M, M') and/or to one terminal module (AM) and
- in that the data flow is also routed by the same electromagnetic method.

3. Control system according to Claims 1 and 2,
characterized
- in that the intermediate modules (M, M') each have at least one transmitter (S) and at least one receiver (E),
- wherein the transmitter transfers data and/or power to other modules (M, M', AM) and wherein the receiver receives data and/or power from other modules (KM, M, M').

4. Control system according to one of the above claims,
characterized in that transmitter (S) and receiver (E) are enclosed at least partly by a casing, and in that transmitter (S) of a first module and receiver (E) of a second module are spatially adjacent and are disposed with respect to one another in such a way that one side of the transmitter casing is opposite one side of the receiver casing, with the result that the transmission path is as short as possible.

## Revendications

1. Commande électronique à structure modulaire,
- dans laquelle un module de tête (KM) est alimenté en énergie électrique à partir d'une source d'alimentation, notamment un réseau, et
- dans laquelle un flux de données et/ou d'énergie est prévu entre les différents modules (KM, M, M', AM),
caractérisée par le fait
- qu'une amenée d'énergie s'effectue à partir du module de tête (KM) via un trajet électromagnétique sans fil vers au moins un module intermédiaire (M, M') et à partir de celui-ci vers au moins un autre module intermédiaire (M, M') et/ou vers un module de terminaison (AM) et
- que le flux de données est aussi conduit par l'intermédiaire du même trajet électromagnétique.

2. Commande programmable en mémoire,
- dans laquelle un module de tête (KM) est alimenté en énergie électrique à partir d'une source d'alimentation, notamment un réseau, et
- dans laquelle un flux de données et/ou d'énergie est prévu entre les différents modules (KM, M, M', AM),
caractérisée par le fait
- qu'une amenée d'énergie s'effectue à partir du module de tête (KM) via un trajet électromagnétique sans fil vers au moins un module intermédiaire (M, M') et à partir de celui-ci vers au moins un autre module intermédiaire (M, M') et/ou vers un module de terminaison (AM) et
que le flux de données est aussi conduit par l'intermédiaire du même trajet électromagnétique.

3. Commande selon la revendication 1 ou 2,
caractérisée par le fait
- que les modules intermédiaires (M, M') comportent à chaque fois au moins un émetteur (S) et au moins un récepteur (E),
- l'émetteur transmettant des données et/ou de l'énergie à d'autres modules (M, M', AM) et le récepteur recevant des données et/ou de l'énergie d'autres modules (KM, M, M').

4. Commande selon l'une des revendications précédentes,
caractérisée par le fait que l'émetteur (S) et le récepteur (E) sont entourés au moins en partie par un boîtier et que l'émetteur (S) d'un premier module et le récepteur (E) d'un deuxième module sont agencés voisins l'un de l'autre dans l'espace et de telle sorte l'un par rapport à l'autre qu'un côté du boîtier d'émetteur se trouve en face d'un côté du boîtier de récepteur de telle sorte que le trajet de transmission est le plus court possible.
